(19) Europäisches Patentamt | European Patent Office | Office européen des brevets

(11) **EP 4 567 399 B1**

(12) **EUROPEAN PATENT SPECIFICATION**

(45) Date of publication and mention
of the grant of the patent:
**08.07.2026 Bulletin 2026/28**

(21) Application number: **24217175.9**

(22) Date of filing: **03.12.2024**

(51) International Patent Classification (IPC):
**G01M 3/28** *(2006.01)* **F17D 5/02** *(2006.01)*

(52) Cooperative Patent Classification (CPC):
**G01M 3/2815; F17D 5/02**

(54) **FLUID TRANSPORT CONDUIT TESTING**

PRÜFUNG EINER FLÜSSIGKEITSTRANSPORTLEITUNG

ESSAI DE CONDUIT DE TRANSPORT DE FLUIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.12.2023 GB 202318560**

(43) Date of publication of application:
**11.06.2025 Bulletin 2025/24**

(73) Proprietor: **Centrica PLC
Windsor, Berkshire SL4 5GD (GB)**

(72) Inventors:
• **MCMURDO, Luke
Windsor SL4 5GD (GB)**
• **HARRIS, James
Windsor SL4 5GD (GB)**

(74) Representative: **HGF
HGF Limited
4th Floor, 1 City Square
Leeds LS1 2ES (GB)**

(56) References cited:
**EP-A1- 1 452 846    US-A1- 2012 150 455
US-B2- 7 107 820**

## Description

### Technical field

The invention relates to methods and apparatus for testing fluid transport conduits. In particular, the invention may relate to testing fluid transport conduits for leaks. The fluid transport conduits may comprise pipework for transporting fuel fluid, such as natural gas or hydrogen around a building for supplying one or more appliances from a mains supply.

### Background

In order to transport natural gas (methane) around a building, infrastructure is installed. This infrastructure includes pipework and/or other fluid transport conduits through which the natural gas may be pumped under pressure.

It is desirable to test the integrity of the infrastructure, in particular the pipework, to ensure that no leaks are present. In the case of natural gas and hydrogen, a leak may lead to potentially harmful and flammable gas escaping into the local environment, which may pose a risk to occupants and other people in the vicinity. Such tests are typically be undertaken as part of an installation of fuel gas carrying infrastructure and/or when the infrastructure is adapted.

It is also noted that other fluids may be transported in the same and/or similar pipework or conduits, which it may also be desirable to test the integrity of.

Regional governmental authorities may require that particular pipework is tested according to a predetermined test standard. One such test standard is imposed by the Health and Safety Executive in the UK. This test involves increasing the pressure in the pipework to 20 mBar, waiting for a specified amount of time and then ensuring that no pressure has been lost from the system. Any pressure loss may indicate a leak.

As the UK and other countries transition to low carbon economies, there is interest in the use of hydrogen as a replacement for natural gas as fuel in buildings. Appliances that previously ran on natural gas may be developed to run on hydrogen, which can be pumped into the building. As part of such a system, the infrastructure within the building, including the pipework, must be suitable to transport hydrogen. New pipework may be fitted that is suitable for transporting hydrogen, or existing pipework that has been used to transport natural gas may be repurposed.

It has been discovered that some faults in pipework can pass the current test without indication. In addition, there is increased nervousness around the integrity of existing installations if they are repurposed to use hydrogen as a new fuel gas. The default position is to install completely new pipework to offset this nervousness as that would be thought to be less likely to leak, but this results in significant additional cost and disruption.

Also, the current test includes a visual inspection of pipework, but this is often not possible to perform because not all pipework is visible and much has been deliberately installed out-of-sight in hard to reach places.

US2012/150455 and US7107820 each disclose a leak detection system. EP1452846 discloses a pressure measuring method and device for measuring the volume of a pipe.

## Summary

Methods and apparatus disclosed are directed to solving one or more problems in the prior art, including those disclosed herein. More particularly, it is desirable to have an improved test for pipework for transporting fuel gas within a building to ensure its integrity and possibly its suitability for use with hydrogen.

According to the invention in an aspect, there is provided an apparatus for determining a fault condition of at least part of a fluid transport conduit associated with a building, the fluid transport conduit for transporting fuel fluid from a mains supply to one or more appliances. The apparatus may comprise a pump configured to pump a test fluid into the fluid transport conduit at a fluid pumping rate for increasing a fluid pressure therein; a connecter for connecting the pump to the fluid transport conduit; a pressure sensor configured to sense fluid pressure in the fluid transport conduit; and a processor configured to determine a fault condition of the fluid transport conduit based on the fluid pumping rate and the sensed fluid pressure.

If the fault condition indicates a fault in the fluid transport conduit, the processor is further configured to determine a type of conduit element in which the fault has occurred based on the sensed fluid pressure at the time the fault is indicated.

Optionally, the type of conduit element comprises one or more of: a connector type; a fitting type; a joint type; and a conduit type.

Optionally, the processor is further configured to determine a location of the fault based on the type of conduit element and prior knowledge about conduit elements used in the fluid transport conduit.

Optionally, determining the fault condition of the fluid transport conduit comprises determining an expected fluid pressure in the fluid transport conduit and/or an expected rate of increase of fluid pressure in the fluid transport conduit based on the fluid pumping rate, and comparing the expected fluid pressure to the sensed fluid pressure and/or comparing the expected rate of increase of fluid pressure with a sensed rate of increase of fluid pressure.

Optionally, if the expected fluid pressure is greater than the sensed fluid pressure by more than a leak threshold value and/or the expected rate of increase of fluid pressure is greater than the sensed rate of increase of fluid pressure by more than a leak rate threshold value, the processor is configured to determine that the test fluid is leaking from the fluid transport conduit.

Optionally, the processor is further configured to determine the expected fluid pressure based on a volume of the fluid transport conduit.

Optionally, as an initial step and when a vent in the fluid transport conduit is open, the apparatus is configured to purge down the fluid transport conduit, the processor being configured to control the pump to pump the test fluid into the fluid transport conduit at an purging fluid pumping rate, and to determine whether the fluid transport conduit is correctly purged down based on a volume of the fluid transport conduit, the purging fluid pumping rate and the sensed fluid pressure.

According to an aspect, there is provided an apparatus for determining a fault condition of at least part of a fluid transport conduit associated with a building, the fluid transport conduit for transporting fuel fluid from a mains supply to one or more appliances, the apparatus comprising: a pump configured to pump a test fluid into the fluid transport conduit at a fluid pumping rate for increasing a fluid pressure therein; a connecter for connecting the pump to the fluid transport conduit; a pressure sensor configured to sense fluid pressure in the fluid transport conduit; and a processor configured to control the pump to pump the fluid into the test fluid transport conduit until each of a plurality of predetermined fluid pressures is reached, and to stop pumping the test fluid into the fluid transport conduit for a test time period, and to determine a fault condition of the fluid transport conduit based on at least one of the predetermined fluid pressures and the sensed fluid pressure. The processor may be configured to control the pump to stop pumping the test fluid into the fluid transport conduit for a test time period at one or more of the predetermined fluid pressures, and optionally at each of the predetermined fluid pressures.

Optionally, the processor is configured to determine the fault condition during the test time period.

Optionally, determining the fault condition comprises monitoring the sensed fluid pressure, and determining that a fault is present if the sensed fluid pressure reduces by more than a leak threshold value during the test time period.

Optionally, prior to the test time period, the processor is configured to stop the pump at each of the plurality of predetermined fluid pressures for a temperature calibration period, and wherein, after the temperature calibration time period, the processor is further configured to: determine a difference between the sensed fluid pressure and a respective predetermined fluid pressure; and if the difference is greater than a calibration threshold, control the pump to pump fluid into the fluid transport conduit and/or vent fluid from the fluid transport fluid conduit to re-establish the respective predetermined fluid pressure.

Optionally, the apparatus further comprises a temperature sensor configured to sense a temperature of the fluid in the fluid transport conduit, and wherein the processor is configured to determine a compensated sensed fluid pressure based on the sensed temperature and the sensed fluid pressure.

Optionally, the test fluid pumped into the fluid transport conduit is a test gas and optionally comprises air, nitrogen and/or helium.

Optionally, the fluid transport conduit comprises fuel gas pipework of a fuel gas system for a building.

Optionally, the connector is configured to connect to the fuel gas pipework at a point where, when the fuel gas system is in use, a fuel gas meter is connected to the fuel gas pipework.

Optionally, the pump is configured to increase the fluid pressure to an upper fluid pressure of in a range from 0.5 Bar to 5 Bar.

According to an aspect, there is provided a method for determining a fault condition of at least part of a fluid transport conduit associated with a building, the fluid transport conduit for transporting fuel fluid from a mains supply to one or more appliances, the method comprising: pumping, by a pump, a test fluid into the fluid transport conduit at a fluid pumping rate for increasing a fluid pressure therein; sensing, by a sensor, the fluid pressure in the fluid transport conduit; and determining, by a processor, a fault condition of the fluid transport conduit based on the fluid pumping rate and the sensed fluid pressure.

According to an aspect, there is provided a method for determining a fault condition of at least part of a fluid transport conduit associated with a building, the fluid transport conduit for transporting fuel fluid from a mains supply to one or more appliances, the method comprising: pumping, by a pump, a test fluid into the fluid transport conduit at a fluid pumping rate for increasing a fluid pressure therein; sensing, by a sensor, the fluid pressure in the fluid transport conduit; controlling, by a processor, the pump to pump the fluid into the fluid transport conduit until each of a plurality of predetermined fluid pressures is reached, and to stop pumping the fluid into the fluid transport conduit for a test time period; and determining, by the processor, a fault condition of the fluid transport conduit based on at least one of the predetermined fluid pressures and the sensed fluid pressure.

According to an aspect, there is provided an apparatus for determining a fault condition of at least part of a fluid transport conduit associated with a building, the fluid transport conduit for transporting fuel fluid from a mains supply to one or more appliances, the apparatus comprising a processor configured to: receive pumping rate data for a pump configured to pump a test fluid into the fluid transport conduit for increasing fluid pressure therein; receive sensed fluid pressure data from a sensor configured to sense the fluid pressure in the fluid transport conduit; and determine a fault condition of the fluid transport conduit based on the fluid pumping rate and the sensed fluid pressure.

According to an aspect, there is provided a method for determining a fault condition of at least part of a fluid transport conduit associated with a building, the fluid transport conduit for transporting fuel fluid from a mains supply to one or more appliances, the method comprising: receiving pumping rate data for a pump configured to pump a fluid into the fluid transport conduit for increasing fluid pressure therein; receiving sensed fluid pressure data from a sensor configured to sense the fluid pressure in the fluid transport conduit; and determining a fault condition of the fluid transport conduit based on the fluid pumping rate and the sensed fluid pressure.

According to an aspect, there is provided an apparatus for determining a fault condition of at least part of a fluid transport conduit associated with a building, the fluid transport conduit for transporting fuel fluid from a mains supply to one or more appliances, the apparatus comprising a processor configured to: control a pump to pump a test fluid into the fluid transport conduit until each of a plurality of predetermined fluid pressures is reached, and to stop pumping the fluid into the fluid transport conduit for a test time period; and determine a fault condition of the fluid transport conduit based on at least one of the predetermined fluid pressures and the sensed fluid pressure.

According to an aspect, there is provided a method for determining a fault condition of at least part of a fluid transport conduit associated with a building, the fluid transport conduit for transporting fuel fluid from a mains supply to one or more appliances, the method comprising: controlling, by a processor, a pump to pump the fluid into the fluid transport conduit until each of a plurality of predetermined fluid pressures is reached, and to stop pumping the fluid into the fluid transport conduit for a test time period; and determining, by the processor, a fault condition of the fluid transport conduit based on at least one of the predetermined fluid pressures and the sensed fluid pressure.

According to an aspect, there is provided a method and an apparatus for determining a volume of a fluid transport conduit. Fluid loss from the fluid transport conduit is known and, in some exemplary arrangements, is substantially zero. The fluid transport conduit may be sealed. The fluid transport conduit is for transporting fuel fluid from a mains supply to one or more appliances in a building/dwelling. The apparatus may comprise a pump configured to pump a test fluid into the fluid transport conduit at a fluid pumping rate for increasing a fluid pressure therein. The pump may be connected to the fluid transport conduit via a connector/valve. A pressure sensor may be configured to sense fluid pressure in the fluid transport conduit. A processor may be configured to determine a volume of the fluid transport conduit based on the fluid pumping rate and the sensed fluid pressure. The fluid pumping rate is indicative of an amount of test fluid that has been pumped into the fluid transport conduit. In alternative arrangements, the amount of fluid that is pumped into the fluid transport conduit may be directly sensed by a separate sensor positioned downstream of the pump.

According to an aspect, there is provided a method and an apparatus for purging a fluid transport conduit or a fluid present therein. Fluid loss from the fluid transport conduit is known and, in some exemplary arrangements, the fluid transport conduit may be open at an end thereof, optionally via a valve. The fluid transport conduit is for transporting fuel fluid from a mains supply to one or more appliances in a building/dwelling. The apparatus may comprise a pump configured to pump a test or fuel fluid into the fluid transport conduit at a fluid pumping rate to purge a further fluid from the conduit. The pump may be connected to the fluid transport conduit via a connector/valve. A pressure sensor may be configured to sense fluid pressure in the fluid transport conduit. A processor may be configured to determine whether the fluid transport conduit is correctly purged based on the sensed pressure and a volume of the fuel transport conduit. In arrangements, the methods and apparatus may be configured to determine the volume of the fluid transport conduit using methods described herein, and in particular above. The processor may determine whether the pipework is correctly purged based on whether a volume of test fluid pumped into the pipework for purging (a purge volume) is above a threshold.

According to the invention in an aspect, there are provided computer program products including computer program code configured, when executed on a computer processor, to control a data processor to undertake the steps of any method described herein.

## Brief description of the drawings

Embodiments of the disclosed methods and apparatus will be described in detail below, with reference to the accompanying drawings, in which:

Figure 1 shows a schematic representation of an apparatus for determining a fault condition of a fluid transport conduit connected to a fluid transport conduit;
Figure 2 shows a schematic representation of an apparatus for determining a fault condition of a fluid transport conduit;
Figures 3 and 4 show flow diagrams of exemplary methods for determining a fault condition of a fluid transport conduit.

## Detailed Description

Generally, disclosed herein are methods and apparatus for determining whether there is a fault in infrastructure for transporting fuel fluid around a building. In arrangements, a fault may result from a lack of integrity of the infrastructure that would result in a leak of fuel fluid to the local environment. The infrastructure may include pipework or another suitable conduit. Accordingly, methods and apparatus may be configured to detect a leak in pipework or other fluid transport conduits.

Methods and apparatus disclosed herein are arranged to increase the pressure within the pipework by pumping a fluid, for example air, into the pipework. Based on a pumping rate, an expected pressure within the pipework may be determined. A sensor is arranged to sense fluid (e.g. air) pressure within the pipework. The sensed pressure may be compared to the expected pressure to determine whether a leak exists in the pipework. In addition, the fluid pressure within the pipework at the time a leak is detected may indicate a type of joint or fixing that is leaking, thereby indicating a likely location of the leak.

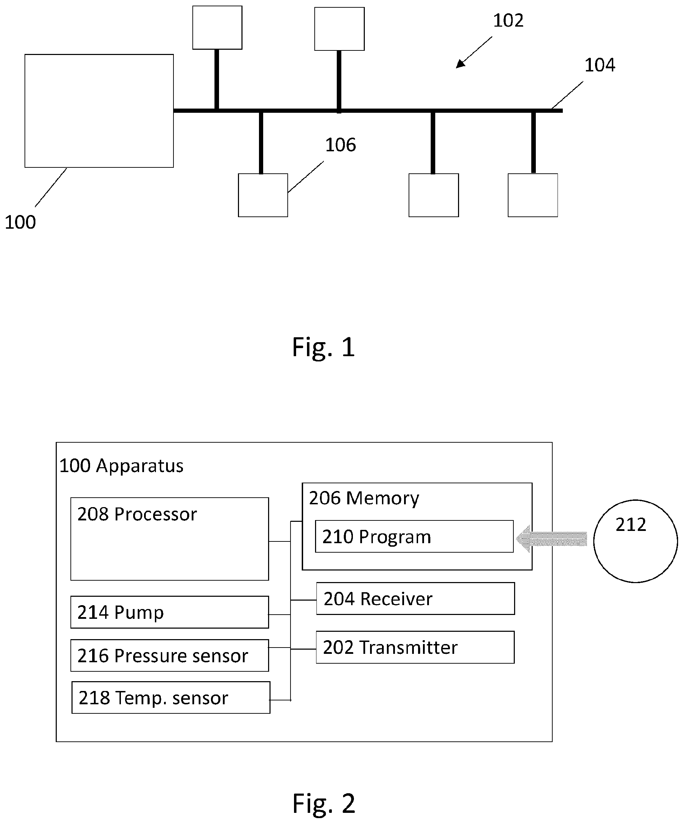

Reference will now be made to Figure 1, which shows an example of an apparatus 100 for detecting a fault in at least part of a fluid transport conduit 102. The fluid transport conduit 102 may form part of a network of conduits, such as pipes, associated with a building, such as a residential or commercial premises. The fluid transport conduit 102 may comprise pipework 104 and one or more appliances 106 and is arranged to transport fuel fluid from a mains supply (not shown) to the one or more appliances 106. The fuel fluid may be a gas, such as one or more of hydrogen, natural gas, propane, butane, liquefied petroleum gas, etc. In such examples, the fluid transport conduit 104 may form a gas pipe that transports such gases to appliances 106 that use the gas to generate heat, such as a gas stove and oven, boiler, gas furnace, etc.

In Figure 1, the conduit 104 is shown as a section of pipework that is fitted to, or forms part of, an existing pipework within a property. The term 'pipework' is used within this document solely to aid clarity and not to limit the scope of the disclosure, which incorporates other types of conduit.

Figure 2 shows a schematic representation of the apparatus 100. The apparatus 100 optionally comprises a transmitter 202 and a receiver 204. The transmitter 202 and receiver 204 may be in data communication with other entities, such as sensors, servers and/or other functions in a telecommunications network, and are configured to transmit and receive data accordingly.

The apparatus 100 further comprises a memory 206 and a processor 208. The memory 206 may comprise a non-volatile memory and/or a volatile memory. The memory 206 may have a computer program 210 stored therein. The computer program 210 may be configured to undertake methods disclosed herein. The computer program 210 may be loaded in the memory 206 from a non-transitory computer readable medium 212, on which the computer program is stored. The apparatus 100 also comprises a pump 214. In addition, the apparatus 100 may include one or more sensors, such as a pressure sensor 216 and/or a temperature sensor 218. The processor 208 is configured to undertake one or more of the functions necessary for operation of one or more of the other elements of the apparatus 100.

In some arrangements, the apparatus 100 may not include the pressure sensor 216 and/or the temperature sensor 218. In such arrangements, those sensors may be positioned elsewhere within or in connection with the pipework 104 so as to measure pressure and/or temperature of a fluid retained in the pipework. Such sensors may transmit data relating to the sensed pressure and/or temperature to the apparatus 100.

Each of the transmitter 202 and receiver 204, memory 206, processor 208, memory 206, pump 214, pressure sensor 216 and temperature sensor 218 is in data communication with the other features of the apparatus 100. The apparatus 100 can be implemented as a combination of hardware and software. In particular, software may be configured to run on the processor 208. The memory 206 stores the various programs/executable files that are implemented by the processor 208, and also provides a storage unit for any required data.

The pump 214 is configured to pump test fluid into the pipework 104 at a fluid pumping rate, thereby increasing the fluid pressure therein. The pump 214 may be connected to an external source of test fluid, such as a cannister of helium, nitrogen, or air. Alternatively, the pump 214 may be operable to draw in air from its surroundings and pump it into the pipework 104. The fluid pumped into the fluid pipework 104 may be considered a 'test fluid' in that it is pumped into the pipework 104 in order to test the integrity of the pipework 104 prior to the pipework 104 being used for the transport of fuel fluid.

In some examples, the pump 214 may include a discharge outlet through which fluid may exit the pump, optionally under control of the processor 208. The pump 214 may be connectable to the pipework 104 by way of a connector. The connector may be configured to connect to the pipework at a point at which the pipework 104 would connect to a meter, for example a gas meter. Accordingly, the entirety of the pipework 104 may be pressurised by the pump 214 and tested.

In some examples, the pump 214 may be a motorised pump such that the rate at which fluid is pumped out of the pump and into the fluid conduit can be controlled.

The pumping rate may be controlled by the processor 208. Optionally, the rate at which fluid is pumped into the pipework 104 may be controllable by way of a valve, such as that used in a gas pressure regulator, for example. Operation of the pump 214 may be controlled via an electronic device and may allow a user to control the fluid pumping rate, e.g., by providing a user input, such as moving a dial or pressing a button on an associated control panel. The electronic device may form part of the pipework 104, or a separate device that is connected to the pump 214.

In some examples, the pump 214 may comprise a casing, within which one or more motors are housed, along with one or more impellers or other compression generators. The casing may include, for example, one or more of a motor, one or more impellers (or other compression mechanism, such as rotor, piston or screw element) powered by the motor, a power supply (or interface for connecting thereto) and a control panel. The pump 214 may also include one or more inlets, further outlets, discharge valves, mounting base or bracket, sensors, etc. as will be understood by the skilled person.

In exemplary arrangements, the pressure sensor 216 may comprise a pressure gauge, such as, Bourdon gauge, for example. The pipework 104 may include an additional connection point for the pressure sensor 216 and/or the temperature sensor 218 such as a valved opening, to which the pressure sensor 216 and/or the temperature sensor 218 can be attached by way of a corresponding connector, such as a valve stem or screw. The pressure sensor 216 may measure gas pressure within the pipework 104. The temperature sensor 218 may measure gas temperature within the pipework 104.

In some arrangements, the pressure sensor 216 and/or the temperature sensor 218 may be located in the apparatus 100. In such arrangements, the pressure sensor 216 and/or the temperature sensor 218 may be configured to sense the fluid pressure and/or fluid temperature in the pipework 104 in close proximity to the point at which the apparatus 100 is connected to the pipework 104. The volume of the pipework to be tested is typically low enough that significant variations in pressure and temperature do not occur at different points within the pipework 104. Therefore, a pressure and/or temperature measurement taken in proximity to the apparatus 100 may be indicative of the pressure and/or temperature within the 10emainnder of the pipework 104.

In Figure 2, the apparatus 100 is also shown as comprising a processor 208 that is configured to determine a fault condition of the pipework 104 based on the fluid pumping rate and the sensed fluid pressure. The fault condition may be indicative of a leak in the pipework 104 (or wider fluid conduit infrastructure to which it is connected). For example, if, for a given pumping rate, the detected pressure within the conduit is lower than an expected pressure, this may indicate that some of the fluid is escaping from the pipework.

In some examples, it may be that the time taken for the pipework to achieve a certain pressure can be calculated (or estimated) based on a known or estimated volume of the pipework and the rate at which test fluid is being pumped into the system. If, after having reached this time, the detected pressure is lower than expected, this may be indicative of a leak.

As explained in detail below, the apparatus 100 may be configured to purge pipework 104 or other infrastructure of fuel fluid to replace with a test fluid (purging down) and/or to purge pipework 104 or other infrastructure of test fluid to replace with a fuel fluid (purging up).

In addition, and also as explained below, the apparatus may be configured to estimate a volume of the pipework 104 or other infrastructure.

In some examples, the pipework may form a section of pipework that is fitted at a location in existing pipework that connects to a meter, such as a gas meter.

For example, the meter may include an outlet to which the conduit can be fitted. Alternatively, it may be that a section of pipework needs to be removed and replaced with the section of pipework to which the pump and pressure sensors can be attached. It may be desirable to connect the conduit at this location since it is generally accessible to a user and may act as a central hub to which the one or more appliances are connected.

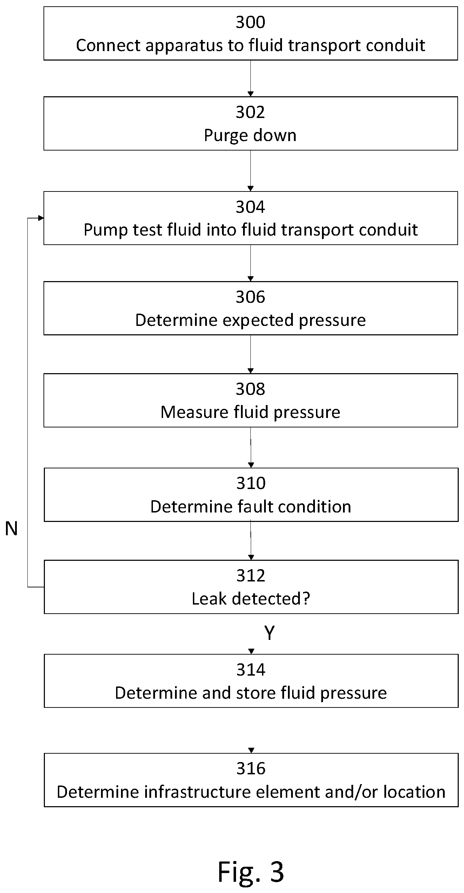

Figure 3 shows a flow chart of an exemplary method.

The apparatus 100 is connected to the pipework 104 via a suitable connector. As discussed already, the apparatus 100 may be connected to the pipework 104 at a point where the pipework 104 would, in use, be connected to a meter. This step is optional as the apparatus may be integral to the fuel fluid infrastructure fitted within the premises. For example, the apparatus 100 may be permanently connected to the pipework 104, e.g. as part of the meter unit.

Optionally, at step 302 the apparatus 100 may purge the pipework 104 or other infrastructure of fuel fluid prior to testing (purging down). In order to purge down, a vent may first be provided to allow fuel fluid to escape from the pipework 104. The vent may comprise a valve or other opening in the pipework 104. The pump 214 is controlled to pump test fluid into the pipework 104 at a known pumping rate. The pumping rate may be indicative of a volume of test fluid that has been pumped into the pipework 104. The pressure sensor 216 is configured to measure the pressure of the test fluid in the pipework.

The processor 208 is configured to determine whether the pipework is correctly purged down based on a volume of the pipework 104, which may be known already or determined by the apparatus 100 (see below), the pumping rate of test fluid and the fluid pressure in the pipework 104 measured by the pressure sensor 216. In exemplary arrangements, the processor 208 may determine whether the pipework is correctly purged based on whether the volume of test fluid pumped into the pipework for purging (the purge volume) is above a set limit, which in exemplary arrangements may be the pipework volume plus a predetermined percentage, which may be up to 75% and in exemplary arrangements may be 20% or 50%. The determination of the purge volume by the processor 208 may be configured to account for volume of air (or other purging fluid), pressure in the pipework and/or time for determining whether a purge has been successful. The processor 208 may be configured to stop the pump 214 from pumping test fluid into the pipework 104 once a maximum pressure is reached therein. The maximum pressure may be in a range from 100 mBar to 200 mBar and in a specific arrangement may be 150 mBar. This prevents damage occurring to the appliances 106 and/or any valves connected to the appliances. The same or a similar process may be undertaken when purging up.

After completion of the purge down, the vent may be closed off to seal the pipework 104. At step 304, the pump 214 is controlled to pump test fluid into the pipework 104. The pumping rate may be controlled by a user through a further electronic device. Alternatively or in addition, the pumping rate may be controlled by the processor 208.

At step 306, an expected fluid pressure is determined based on the volume of the pipework 104 and the pumping rate of the pump 214. This calculation will be well known to a skilled person. In arrangements, a correlation between the pumping rate and a rate of increase in fluid pressure may be determined by the processor 208. This in turn may allow the processor 208 to determine an expected increase in fluid pressure within the pipework 104 over time based on the pumping rate and the sensed fluid pressure. The expected increase in fluid pressure over time may be useful when the volume of the pipework 104 is unknown and/or to increase the accuracy of the fault detection. The expected fluid pressure and/or the expected rate of fluid pressure increase are determined for pipework that does not have a leak.

At step 308, the pressure sensor 216 is configured to measure the fluid pressure in the pipework 104. Optionally, the temperature sensor 218 may be configured also to measure fluid temperature in the pipework 104. The temperature measurement may be used to improve the accuracy of the pressure measurement by compensating for temperature effects on the measured pressure. The calculation for doing this will be known to the skilled person and can be found in the Strength Testing, Tightness Testing and Direct Purging of Industrial and Commercial Gas Installations, IGE/UP/1 Edition 2, which specifies a correction for gauge movement due to temperature change as:

$$GM_{GT} = 0.00333(TTP + 1000)[T_t - T_0]$$

Where GM is the measured fall in gauge reading in mBar, TTP is the tightness test pressure in mBar, $T_t$ is the fluid temperature at the end of a test and $T_0$ is the fluid temperature at the start of the test.

At step 310, the processor 208 determines whether there is a fault (e.g. a leak) in the pipework 104 based on the expected fluid pressure and the measured fluid pressure. If the expected pressure is greater than the measured pressure by more than a leak threshold value then the processor 208 is configured to determine that a leak is present in the pipework.

Alternatively or in addition, the processor 208 may determine whether there is a fault (e.g. a leak) in the pipework 104 based on the expected rate of increase in fluid pressure and the measured rate of increase in fluid pressure.

In exemplary arrangements, the apparatus 100 may be configured to determine a pressure at which a leak is detected. This may give an indication of a type of connector, joint or other infrastructure element in which the leak has occurred. This information may allow determination of where the leak may be found for repair, based on knowledge of where each infrastructure element is positioned within the premises.

Through testing, it has been established that different infrastructure elements, such as pipework connectors, pipework fixings and/or pipework joints may fail or leak at different fluid pressures. Therefore, knowledge of the fluid pressure at which a leak has occurred is indicative of the infrastructure element in which the leak is present. As an example, it may be known that a first infrastructure element will fail in a range from a first fluid pressure to a second fluid pressure. It may be known that a second infrastructure element will fail in a range from a third fluid pressure to a fourth fluid pressure. If the failure condition occurs at a fluid pressure in the range from the first fluid pressure to the second fluid pressure then the processor may determine that the first infrastructure element has failed. If the failure condition occurs at a fluid pressure in the range from the third fluid pressure to the fourth fluid pressure then the processor may determine that the second infrastructure element has failed. In some arrangements, the location of different infrastructure elements in the building is known. Accordingly, identification of the type of infrastructure element that has failed may indicate a location of the failure in the building. For example, one region of the building may have infrastructure installed at a different time that may therefore be of a different type to infrastructure in a further region of the building that was installed earlier or later.

Accordingly, the processor 208 may determine at step 312 whether a leak has been detected. If not then the pump 214 continues to pump test fluid into the pipework 104. If a leak is detected then, at step 314, the processor 208 determines and optionally stores the fluid pressure in the pipework 104 at the time the difference between the expected pressure and the measured pressure exceeded the leak threshold value. The processor may then, at step 316, determine the infrastructure element in which the leak has occurred, e.g. by referring to data saved in memory 206 or otherwise obtained (e.g. over the internet) identifying the pressures at which a number of infrastructure elements are likely to fail. Optionally, the processor 208 may refer to further data stored in the memory 206 or obtained from elsewhere to indicate where in the pipework 104 such infrastructure elements are located.

If a leak is detected then the test may be terminated. If no leak is detected then the pump 214 continues to pump test fluid into the pipework 104 until a maximum fluid pressure is reached within the pipework 104. In exemplary arrangements the maximum fluid pressure may be in a range from 0.5 Bar to 5 Bar, from 0.5 Bar to 2 Bar, from 0.75 Bar to 1.25 Bar and in one specific arrangement may be 1 Bar.

After the maximum fluid pressure is reached, the processor 208 is configured to monitor the measured fluid pressure for a period of time. If, during that period of time, the measured fluid pressure drops by greater than a threshold value then the processor 208 is configured to determine that there is a leak in the pipework 104.

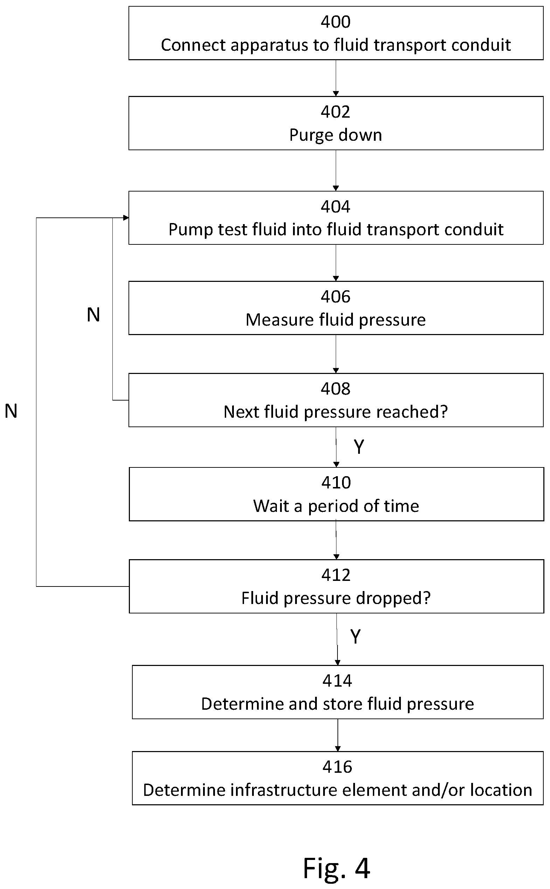

Figure 4 is a further flow chart showing an exemplary method. Steps 400-404 are the same as steps 300-304 of Figure 3 and are not described again here. In Figure 4, the increasing of fluid pressure is not continuous but is undertaken in a number of discrete steps.

At step 406, the pressure sensor 216 measures the fluid pressure. This may be done in the ways described herein and may optionally incorporate a temperature measurement by the temperature sensor 218 and subsequent compensation of the pressure measurement by the processor 208.

At step 408 it is determined whether the next of a plurality of predetermined fluid pressures has been reached. If not then the pump 214 continues to increase the fluid pressure. I yes then the method proceeds to step 410 at which the pump 214 is stopped and a test time period is allowed to pass.

At step 412, the fluid pressure in the pipework 104 is measured again (optionally compensating for temperature) and it is determined whether the fluid pressure has dropped by greater than a leak threshold value. If no then the method returns to step 404 and the pump is operated to continue to increase the fluid pressure to the next of the plurality of predetermined fluid pressures. If yes then steps 414 and 416 are undertaken, which are the same or similar to steps 314 and 316 and are not described again in detail here.

In some arrangements, at each of the plurality of predetermined fluid pressures, the processor 208 is configured to wait for a calibration time period before the test time period. The calibration time period is determined so as to allow temperature effects on the fluid pressure to be removed. Following the calibration time period, the processor 208 may determine whether the fluid pressure in the pipework 104 has changed and, if so, may control the pump 214 to increase or decrease the fluid pressure such that

As discussed above, if no leak is detected then the pump 214 continues to pass through the method of Figure 4 until a maximum fluid pressure is reached within the pipework 104. In exemplary arrangements the maximum fluid pressure may be in a range from 0.5 Bar to 5 Bar, from 0.5 Bar to 2 Bar, from 0.75 Bar to 1.25 Bar and in one specific arrangement may be 1 Bar. After the maximum fluid pressure is reached, the processor 208 is configured to monitor the measured fluid pressure for a period of time. If, during that period of time, the measured fluid pressure drops by greater than a threshold value then the processor 208 is configured to determine that there is a leak in the pipework 104.

The plurality of predetermined fluid pressures referred to in respect of Figure 4 may be period or may be differently spaced. In some examples, the predetermined fluid pressures may be spaced by a pressure in a range from 25 mBar to 75 mBar and in one specific example may be spaced by 50 mBar.

In exemplary methods, the apparatus 100 may be configured to determine a volume of the infrastructure to be tested, e.g. a volume of the pipework 104. The pump 214 may be configured to pump test fluid into the pipework 104 at a known pumping rate. The pumping rate may be indicative of a volume of test fluid that has been pumped into the pipework 104.

The pressure sensor 216 is configured to measure the pressure of the test fluid in the pipework.

After a predetermined volume of air has been pumped into the pipework 104 and/or a predetermined fluid pressure has been reached based on the sensor 216 measurements, the processor 208 is configured to determine a volume of the pipework 104 based on the volume of test fluid pumped into the pipework 104 and the measured pressure. This is a simple calculation and may be done in ways that would be known to a skilled person. In arrangements, the pressure sensor 216 may monitor pressure in the pipework 104 over a period of time so as to ensure there are no significant leaks in the pipework at the predetermined pressure that might affect the determination of the volume of the pipework. If such a leak is detected then a fault condition may be indicated.

A computer program may be configured to provide any of the above-described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random-access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

It will be apparent to those skilled in the art that various modifications and variations can be made to the disclosed systems and methods. Other embodiments will be apparent to those skilled in the art from consideration of the specification and practice of the disclosed systems and methods. It is intended that the specification and examples be considered as exemplary only, with a true scope being indicated by the following claims.

## Claims

1. An apparatus (100) for determining a fault condition of at least part of a fluid transport conduit (102) comprising fuel gas pipework (104) of a fuel gas system for a building, the fluid transport conduit (102) for transporting fuel fluid from a mains supply to one or more appliances (106), the apparatus (100) comprising:

   a pump (214) configured to pump a test fluid into the fluid transport conduit (102) at a fluid pumping rate for increasing a fluid pressure therein;
   a connecter for connecting the pump (214) to the fluid transport conduit (102);
   a pressure sensor (216) configured to sense fluid pressure in the fluid transport conduit (102); and
   a processor (208) configured to determine a fault condition of the fluid transport conduit (102) based on the fluid pumping rate and the sensed fluid pressure, wherein, if the fault condition indicates a fault in the fluid transport conduit (102), the processor (208) is further configured to determine a type of conduit element in which the fault has occurred based on the sensed fluid pressure at the time the fault is indicated.

2. The apparatus (100) according to claim 1, wherein the type of conduit element comprises one or more of: a connector type; a fitting type; a joint type; and a conduit type and/or wherein the processor (208) is further configured to determine a location of the fault based on the type of conduit element and prior knowledge about conduit elements used in the fluid transport conduit (102).

3. The apparatus (100) according any preceding claim, wherein determining the fault condition of the fluid transport conduit (102) comprises determining an expected fluid pressure in the fluid transport conduit (102) and/or an expected rate of increase of fluid pressure in the fluid transport conduit based on the fluid pumping rate,
   and comparing the expected fluid pressure to the sensed fluid pressure and/or comparing the expected rate of increase of fluid pressure with a sensed rate of increase of fluid pressure.

4. The apparatus (100) according to claim 3, wherein, if the expected fluid pressure is greater than the sensed fluid pressure by more than a leak threshold value and/or the expected rate of increase of fluid pressure is greater than the sensed rate of increase of fluid pressure by more than a leak rate threshold value, the processor (208) is configured to determine that the test fluid is leaking from the fluid transport conduit (102).

5. The apparatus (100) according to claim 3 or 4, wherein the processor (208) is further configured to determine the expected fluid pressure based on a volume of the fluid transport conduit (102).

6. The apparatus (100) according to any preceding claim, wherein, as an initial step and when a vent in the fluid transport conduit is open, the apparatus is configured to purge down the fluid transport conduit (102),

   the processor (208) being configured to control the pump (214) to pump the test fluid into the fluid transport conduit (102) at an purging fluid pumping rate,
   and to determine whether the fluid transport conduit is correctly purged down based on a volume of the fluid transport conduit (102), the purging fluid pumping rate and the sensed fluid pressure.

7. The apparatus (100) according to any preceding claim, wherein the processor (208) is configured to control the pump (214) to pump the fluid into the test fluid transport conduit (102) until each of a plurality of predetermined fluid pressures is reached, and to stop pumping the test fluid into the fluid transport conduit (102) for a test time period, and wherein the processor (208) is further configured to determine a fault condition of the fluid transport conduit (102) based on at least one of the predetermined fluid pressures and the sensed fluid pressure.

8. The apparatus (100) according to claim 7, wherein the processor (208) is configured to determine the fault condition during the test time period, and optionally wherein determining the fault condition comprises monitoring the sensed fluid pressure, and determining that a fault is present if the sensed fluid pressure reduces by more than a leak threshold value during the test time period.

9. The apparatus (100) according to claim 7 or 8, wherein, prior to the test time period, the processor (208) is configured to stop the pump (214) at each of the plurality of predetermined fluid pressures for a temperature calibration period, and wherein, after the temperature calibration time period, the processor (208) is further configured to:

   determine a difference between the sensed fluid pressure and a respective predetermined fluid pressure; and
   if the difference is greater than a calibration threshold, control the pump (214) to pump fluid into the fluid transport conduit (102) and/or vent fluid from the fluid transport fluid conduit (102) to re-establish the respective predetermined fluid pressure.

10. The apparatus (100) according to any preceding claim, wherein the test fluid pumped into the fluid transport conduit (102) is a test gas and optionally comprises air, nitrogen and/or helium.

11. The apparatus (100) according to any preceding claim, wherein the connector is configured to connect to the fuel gas pipework (104) at a point where, when the fuel gas system is in use, a fuel gas meter is connected to the fuel gas pipework (104), and/or wherein the pump (214) is configured to increase the fluid pressure to an upper fluid pressure of in a range from 0.5 Bar to 5 Bar.

12. The apparatus (100) according to any preceding claim, wherein the processor (208) is configured to:

   receive pumping rate data for a pump (214) configured to pump a test fluid into the fluid transport conduit (102) for increasing fluid pressure therein;
   receive sensed fluid pressure data from a sensor configured to sense the fluid pressure in the fluid transport conduit (102);

13. A method for determining a fault condition of at least part of a fluid transport conduit (102) comprising fuel gas pipework (104) of a fuel gas system for a building, the fluid transport conduit (102) for transporting fuel fluid from a mains supply to one or more appliances (106), the method comprising:

   pumping, by a pump (214), a test fluid into the fluid transport conduit (102) at a fluid pumping rate for increasing a fluid pressure therein;
   sensing, by a sensor, the fluid pressure in the fluid transport conduit (102);
   determining, by a processor (208), a fault condition of the fluid transport conduit (102) based on the fluid pumping rate and the sensed fluid pressure; and
   if the fault condition indicates a fault in the fluid transport conduit (102), determining, by the processor (208), a type of conduit element in which the fault has occurred based on the sensed fluid pressure at the time the fault is indicated.

14. The method according to claim 13, comprising:

   receiving pumping rate data for a pump (214) configured to pump a fluid into the fluid transport conduit (102) for increasing fluid pressure therein; and
   receiving sensed fluid pressure data from a sensor configured to sense the fluid pressure in the fluid transport conduit (102).

15. A computer program product comprising computer program code that, when executed on one or more processors (208), controls the one or more processors (208) to undertake the method of claim 14.

## Patentansprüche

1. Gerät (100) zum Bestimmen eines Fehlerzustands zumindest eines Teils einer Fluidtransportleitung (102), die eine Brenngasrohrleitung (104) eines Brenngassystems für ein Gebäude umfasst, wobei die Fluidtransportleitung (102) zum Transportieren von Brennstofffluid von einer Netzversorgung zu einer oder mehreren Vorrichtungen (106) dient, wobei das Gerät (100) Folgendes umfasst:

    eine Pumpe (214), die dazu konfiguriert ist, ein Prüffluid mit einer Fluidpumprate in die Fluidtransportleitung (102) zu pumpen, um einen Fluiddruck darin zu erhöhen;
    einen Stecker zum Verbinden der Pumpe (214) mit der Fluidtransportleitung (102);
    einen Drucksensor (216), der dazu konfiguriert ist, einen Fluiddruck in der Fluidtransportleitung (102) zu erfassen; und
    einen Prozessor (208), der dazu konfiguriert ist, einen Fehlerzustand der Fluidtransportleitung (102) basierend auf der Fluidpumprate und dem erfassten Fluiddruck zu bestimmen, wobei, wenn der Fehlerzustand einen Fehler in der Fluidtransportleitung (102) angibt, der Prozessor (208) ferner dazu konfiguriert ist, einen Typ von Leitungselement, in dem der Fehler aufgetreten ist, basierend auf dem erfassten Fluiddruck zu dem Zeitpunkt, zu dem der Fehler angegeben wird, zu bestimmen.

2. Gerät (100) nach Anspruch 1, wobei der Typ von Leitungselement einen oder mehrere von Folgendem umfasst: einen Verbindertyp; einen Garniturtyp; einen Verbindungstyp; und einen Leitungstyp und/oder wobei der Prozessor (208) ferner dazu konfiguriert ist, einen Ort des Fehlers basierend auf dem Typ von Leitungselement und Vorwissen über Leitungselemente, die in der Fluidtransportleitung (102) verwendet werden, zu bestimmen.

3. Gerät (100) nach einem vorhergehenden Anspruch, wobei das Bestimmen des Fehlerzustands der Fluidtransportleitung (102) das Bestimmen eines erwarteten Fluiddrucks in der Fluidtransportleitung (102) und/oder einer erwarteten Anstiegsrate des Fluiddrucks in der Fluidtransportleitung basierend auf der Fluidpumprate und das Vergleichen des erwarteten Fluiddrucks mit dem erfassten Fluiddruck und/oder das Vergleichen der erwarteten Anstiegsrate des Fluiddrucks mit einer erfassten Anstiegsrate des Fluiddrucks umfasst.

4. Gerät (100) nach Anspruch 3, wobei, wenn der erwartete Fluiddruck um mehr als einen Leckschwellenwert größer als der erfasste Fluiddruck ist und/oder die erwartete Anstiegsrate des Fluiddrucks um mehr als einen Leckratenschwellenwert größer als die erfasste Anstiegsrate des Fluiddrucks ist, der Prozessor (208) dazu konfiguriert ist, zu bestimmen, dass das Prüffluid aus der Fluidtransportleitung (102) leckt.

5. Gerät (100) nach Anspruch 3 oder 4, wobei der Prozessor (208) ferner dazu konfiguriert ist, den erwarteten Fluiddruck basierend auf einem Volumen der Fluidtransportleitung (102) zu bestimmen.

6. Gerät (100) nach einem vorhergehenden Anspruch, wobei das Gerät, als anfänglicher Schritt und wenn eine Entlüftung in der Fluidtransportleitung offen ist, dazu konfiguriert ist, die Fluidtransportleitung (102) freizuspülen, der Prozessor (208) dazu konfiguriert ist, die Pumpe (214) zu steuern, um das Prüffluid mit einer Spülfluidpumprate in die Fluidtransportleitung (102) zu pumpen, und basierend auf einem Volumen der Fluidtransportleitung (102), der Spülfluidpumprate und dem erfassten Fluiddruck zu bestimmen, ob die Fluidtransportleitung korrekt freigespült wird.

7. Gerät (100) nach einem vorhergehenden Anspruch, wobei der Prozessor (208) dazu konfiguriert ist, die Pumpe (214) zu steuern, um das Fluid in die Prüffluidtransportleitung (102) zu pumpen, bis jeder einer Vielzahl von vorbestimmten Fluiddrücken erreicht ist, und das Pumpen des Prüffluids in die Fluidtransportleitung (102) für einen Prüfzeitraum zu stoppen, und wobei der Prozessor (208) ferner dazu konfiguriert ist, einen Fehlerzustand der Fluidtransportleitung (102) basierend auf mindestens einem von den vorbestimmten Fluiddrücken und dem erfassten Fluiddruck zu bestimmen.

8. Gerät (100) nach Anspruch 7, wobei der Prozessor (208) dazu konfiguriert ist, den Fehlerzustand während des Prüfzeitraums zu bestimmen, und wobei optional das Bestimmen des Fehlerzustands das Überwachen des erfassten Fluiddrucks und das Bestimmen, dass ein Fehler vorliegt, wenn sich der erfasste Fluiddruck während des Prüfzeitraums um mehr als einen Leckschwellenwert verringert, umfasst.

9. Gerät (100) nach Anspruch 7 oder 8, wobei der Prozessor (208) vor dem Prüfzeitraum dazu konfiguriert ist, die Pumpe (214) bei jedem der Vielzahl von vorbestimmten Fluiddrücken für einen Temperaturkalibrierungszeitraum zu stoppen, und wobei der Prozessor (208) nach dem Temperaturkalibrierungszeitraum ferner zu Folgendem konfiguriert ist:



Bestimmen einer Differenz zwischen dem erfassten Fluiddruck und einem jeweiligen vorbestimmten Fluiddruck; und
wenn die Differenz größer als ein Kalibrierungsschwellenwert ist, Steuern der Pumpe (214), um Fluid in die Fluidtransportleitung (102) zu pumpen und/oder Fluid aus der Fluidtransportleitung (102) zu entlüften, um den jeweiligen vorbestimmten Fluiddruck wiederherzustellen.

**10.** Gerät (100) nach einem vorhergehenden Anspruch, wobei das in die Fluidtransportleitung (102) gepumpte Prüffluid ein Prüfgas ist und optional Luft, Stickstoff und/oder Helium umfasst.

**11.** Gerät (100) nach einem vorhergehenden Anspruch, wobei der Verbinder dazu konfiguriert ist, an einem Punkt mit der Brenngasrohrleitung (104) verbunden zu werden, an dem, wenn das Brenngassystem in Gebrauch ist, ein Brenngaszähler mit der Brenngasrohrleitung (104) verbunden ist, und/oder wobei die Pumpe (214) dazu konfiguriert ist, den Fluiddruck auf einen oberen Fluiddruck in einem Bereich von 0,5 Bar bis 5 Bar zu erhöhen.

**12.** Gerät (100) nach einem vorhergehenden Anspruch, wobei der Prozessor (208) zu Folgendem konfiguriert ist:

Empfangen von Pumpratendaten für eine Pumpe (214), die dazu konfiguriert ist, ein Prüffluid in die Fluidtransportleitung (102) zu pumpen, um den Fluiddruck darin zu erhöhen;
Empfangen von erfassten Fluiddruckdaten von einem Sensor, der dazu konfiguriert ist, den Fluiddruck in der Fluidtransportleitung (102) zu erfassen.

**13.** Verfahren zum Bestimmen eines Fehlerzustands zumindest eines Teils einer Fluidtransportleitung (102), die eine Brenngasrohrleitung (104) eines Brenngassystems für ein Gebäude umfasst, wobei die Fluidtransportleitung (102) zum Transportieren von Brennstofffluid von einer Netzversorgung zu einer oder mehreren Vorrichtungen (106) dient, wobei das Verfahren Folgendes umfasst:

Pumpen, durch eine Pumpe (214), eines Prüffluids mit einer Fluidpumprate in die Fluidtransportleitung (102), um einen Fluiddruck darin zu erhöhen;
Erfassen, durch einen Sensor, des Fluiddrucks in der Fluidtransportleitung (102);
Bestimmen, durch einen Prozessor (208), eines Fehlerzustands der Fluidtransportleitung (102) basierend auf der Fluidpumprate und dem erfassten Fluiddruck; und
wenn der Fehlerzustand einen Fehler in der Fluidtransportleitung (102) angibt, Bestimmen, durch den Prozessor (208), eines Typs von Leitungselement, in dem der Fehler aufgetreten ist, basierend auf dem erfassten Fluiddruck zu dem Zeitpunkt, zu dem der Fehler angegeben wird.

**14.** Verfahren nach Anspruch 13, umfassend:

Empfangen von Pumpratendaten für eine Pumpe (214), die dazu konfiguriert ist, ein Fluid in die Fluidtransportleitung (102) zu pumpen, um den Fluiddruck darin zu erhöhen; und
Empfangen von erfassten Fluiddruckdaten von einem Sensor, der dazu konfiguriert ist, den Fluiddruck in der Fluidtransportleitung (102) zu erfassen.

**15.** Computerprogrammprodukt, umfassend Computerprogrammcode, der, wenn er auf einem oder mehreren Prozessoren (208) ausgeführt wird, den einen oder die mehreren Prozessoren (208) steuert, um das Verfahren nach Anspruch 14 durchzuführen.

## Revendications

**1.** Appareil (100) destiné à déterminer un état de panne d'au moins une partie d'un conduit de transport de fluide (102) comprenant une tuyauterie de gaz combustible (104) d'un système de gaz combustible destiné à un bâtiment, le conduit de transport de fluide (102) destiné à transporter un fluide combustible à partir d'une alimentation secteur jusqu'à un ou plusieurs dispositifs (106), l'appareil (100) comprenant :

une pompe (214) conçue pour pomper un fluide d'essai dans le conduit de transport de fluide (102) à un débit de pompage de fluide destiné à augmenter une pression de fluide dans celui-ci ;
un élément reliant destiné à relier la pompe (214) au conduit de transport de fluide (102) ;
un capteur de pression (216) conçu pour détecter une pression de fluide dans le conduit de transport de fluide (102) ; et
un processeur (208) conçu pour déterminer un état de panne du conduit de transport de fluide (102) sur la base du débit de pompage de fluide et de la pression de fluide détectée, dans lequel, si l'état de panne indique une panne dans le conduit de transport de fluide (102), le processeur (208) est en outre conçu pour déterminer un type d'élément de conduit dans lequel la panne s'est produite sur la base de la pression de fluide détectée au moment où la panne est indiquée.

**2.** Appareil (100) selon la revendication 1, dans lequel le type d'élément de conduit comprend un ou plusieurs parmi : un type d'élément de liaison ; un type de raccord ; un type de joint ; et un type de conduit et/ou dans lequel le processeur (208) est en outre conçu pour déterminer un emplacement de la panne sur la base du type d'élément de conduit et de connaissances antérieures sur les éléments de conduit utilisés dans le conduit de transport de fluide (102).

3. Appareil (100) selon une quelconque revendication précédente, dans lequel la détermination de l'état de panne du conduit de transport de fluide (102) comprend la détermination d'une pression de fluide attendue dans le conduit de transport de fluide (102) et/ou d'un débit d'augmentation de pression de fluide attendu dans le conduit de transport de fluide sur la base du débit de pompage de fluide, et la comparaison de la pression de fluide attendue à la pression de fluide détectée et/ou la comparaison du débit d'augmentation de pression de fluide attendu à un débit d'augmentation de pression de fluide détecté.

4. Appareil (100) selon la revendication 3, dans lequel, si la pression de fluide attendue est supérieure à la pression de fluide détectée de plus d'une valeur seuil de fuite et/ou le débit attendu d'augmentation de la pression de fluide est supérieur au débit détecté d'augmentation de pression de fluide de plus d'une valeur seuil de débit de fuite, le processeur (208) est conçu pour déterminer que le fluide d'essai fuit du conduit de transport de fluide (102).

5. Appareil (100) selon la revendication 3 ou 4, dans lequel le processeur (208) est en outre conçu pour déterminer la pression de fluide attendue sur la base d'un volume du conduit de transport de fluide (102).

6. Appareil (100) selon une quelconque revendication précédente, dans lequel, en tant qu'étape initiale et lorsqu'un évent dans le conduit de transport de fluide est ouvert, l'appareil est conçu pour purger le conduit de transport de fluide (102),

le processeur (208) étant conçu pour commander à la pompe (214) de pomper le fluide d'essai dans le conduit de transport de fluide (102) à un débit de pompage de fluide de purge, et pour déterminer si le conduit de transport de fluide est correctement purgé sur la base d'un volume du conduit de transport de fluide (102), du débit de pompage de fluide de purge et de la pression de fluide détectée.

7. Appareil (100) selon une quelconque revendication précédente, dans lequel le processeur (208) est conçu pour commander à la pompe (214) de pomper le fluide dans le conduit de transport de fluide d'essai (102) jusqu'à ce que chacune d'une pluralité de pressions de fluide prédéterminées soit atteinte, et pour arrêter le pompage du fluide d'essai dans le conduit de transport de fluide (102) pendant une période de temps d'essai, et dans lequel le processeur (208) est en outre conçu pour déterminer un état de panne du conduit de transport de fluide (102) sur la base d'au moins une des pressions de fluide prédéterminées et de la pression de fluide détectée.

8. Appareil (100) selon la revendication 7, dans lequel le processeur (208) est conçu pour déterminer l'état de panne pendant la période de temps d'essai, et éventuellement dans lequel la détermination de l'état de panne comprend la surveillance de la pression de fluide détectée, et la détermination du fait qu'une panne est présente si la pression de fluide détectée diminue de plus d'une valeur seuil de fuite pendant la période de temps d'essai.

9. Appareil (100) selon la revendication 7 ou 8, dans lequel, avant la période de temps d'essai, le processeur (208) est conçu pour arrêter la pompe (214) à chacune de la pluralité de pressions de fluide prédéterminées pendant une période d'étalonnage de température, et dans lequel, après la période de temps d'étalonnage de température, le processeur (208) est en outre conçu pour :

déterminer une différence entre la pression de fluide détectée et une pression de fluide prédéterminée respective ; et si la différence est supérieure à un seuil d'étalonnage, commander à la pompe (214) de pomper du fluide dans le conduit de transport de fluide (102) et/ou d'évacuer du fluide hors du conduit de transport de fluide (102) pour rétablir la pression de fluide prédéterminée respective.

10. Appareil (100) selon une quelconque revendication précédente, dans lequel le fluide d'essai pompé dans le conduit de transport de fluide (102) est un gaz d'essai et comprend éventuellement de l'air, de l'azote et/ou de l'hélium.

11. Appareil (100) selon une quelconque revendication précédente, dans lequel l'élément de liaison est conçu pour se relier à la tuyauterie de gaz combustible (104) au niveau d'un point où, lorsque le système de gaz combustible est en utilisation, un compteur de gaz combustible est relié à la tuyauterie de gaz combustible (104), et/ou dans lequel la pompe (214) est conçue pour augmenter la pression de fluide à une pression de fluide plus élevée dans une plage de 0,5 bar à 5 bar.

**12.** Appareil (100) selon une quelconque revendication précédente, dans lequel le processeur (208) est conçu pour :

recevoir des données de débit de pompage pour une pompe (214) conçue pour pomper un fluide d'essai dans le conduit de transport de fluide (102) destiné à augmenter la pression de fluide dans celui-ci ;

recevoir des données de pression de fluide détectées provenant d'un capteur conçu pour détecter la pression de fluide dans le conduit de transport de fluide (102).

**13.** Procédé destiné à déterminer un état de panne d'au moins une partie d'un conduit de transport de fluide (102) comprenant une tuyauterie de gaz combustible (104) d'un système de gaz combustible destiné à un bâtiment, le conduit de transport de fluide (102) destiné à transporter un fluide combustible à partir d'une alimentation secteur jusqu'à un ou plusieurs dispositifs (106), le procédé comprenant :

le pompage, par une pompe (214), d'un fluide d'essai dans le conduit de transport de fluide (102) à un débit de pompage de fluide destiné à augmenter une pression de fluide dans celui-ci ;

la détection, par un capteur, de la pression de fluide dans le conduit de transport de fluide (102) ;

la détermination, par un processeur (208), d'un état de panne du conduit de transport de fluide (102) sur la base du débit de pompage de fluide et de la pression de fluide détectée ; et

si l'état de panne indique une panne dans le conduit de transport de fluide (102), la détermination, par le processeur (208), d'un type d'élément de conduit dans lequel la panne s'est produite sur la base de la pression de fluide détectée au moment où la panne est indiquée.

**14.** Procédé selon la revendication 13, comprenant :

la réception de données de débit de pompage pour une pompe (214) conçue pour pomper un fluide dans le conduit de transport de fluide (102) destiné à augmenter la pression de fluide dans celui-ci ; et

la réception de données de pression de fluide détectées à partir d'un capteur conçu pour détecter la pression de fluide dans le conduit de transport de fluide (102).

**15.** Produit-programme informatique comprenant un code de programme informatique qui, lorsqu'il est exécuté sur un ou plusieurs processeurs (208), commande aux un ou plusieurs processeurs (208) d'entreprendre le procédé de la revendication 14.

Fig. 1

Fig. 2

```
┌─────────────────────────────────────────┐
│                   300                    │
│   Connect apparatus to fluid transport   │
│                 conduit                  │
└─────────────────────────────────────────┘
                    │
                    ▼
┌─────────────────────────────────────────┐
│                   302                    │
│                Purge down                │
└─────────────────────────────────────────┘
                    │
                    ▼
┌─────────────────────────────────────────┐
│                   304                    │
│   Pump test fluid into fluid transport   │
│                 conduit                  │
└─────────────────────────────────────────┘
                    │
                    ▼
┌─────────────────────────────────────────┐
│                   306                    │
│        Determine expected pressure       │
└─────────────────────────────────────────┘
                    │
                    ▼
┌─────────────────────────────────────────┐
│                   308                    │
│          Measure fluid pressure          │
└─────────────────────────────────────────┘
                    │
                    ▼
┌─────────────────────────────────────────┐
│                   310                    │
│          Determine fault condition       │
└─────────────────────────────────────────┘
                    │
                    ▼
┌─────────────────────────────────────────┐
│                   312                    │
│              Leak detected?              │
└─────────────────────────────────────────┘
               N        Y
                    │
                    ▼
┌─────────────────────────────────────────┐
│                   314                    │
│       Determine and store fluid pressure │
└─────────────────────────────────────────┘
                    │
                    ▼
┌─────────────────────────────────────────┐
│                   316                    │
│ Determine infrastructure element and/or  │
│                 location                 │
└─────────────────────────────────────────┘
```

Fig. 3

```
┌─────────────────────────────────────────────────┐
│                      400                        │
│     Connect apparatus to fluid transport conduit│
└─────────────────────────────────────────────────┘
                          │
                          ▼
┌─────────────────────────────────────────────────┐
│                      402                        │
│                   Purge down                    │
└─────────────────────────────────────────────────┘
                          │
                          ▼
┌─────────────────────────────────────────────────┐
│                      404                        │
│     Pump test fluid into fluid transport conduit│
└─────────────────────────────────────────────────┘
                          │
                          ▼
┌─────────────────────────────────────────────────┐
│                      406                        │
│               Measure fluid pressure            │
└─────────────────────────────────────────────────┘
                          │
                          ▼
┌─────────────────────────────────────────────────┐
│                      408                        │
│           Next fluid pressure reached?          │
└─────────────────────────────────────────────────┘
                          │ Y
                          ▼
┌─────────────────────────────────────────────────┐
│                      410                        │
│               Wait a period of time             │
└─────────────────────────────────────────────────┘
                          │
                          ▼
┌─────────────────────────────────────────────────┐
│                      412                        │
│              Fluid pressure dropped?            │
└─────────────────────────────────────────────────┘
                          │ Y
                          ▼
┌─────────────────────────────────────────────────┐
│                      414                        │
│          Determine and store fluid pressure     │
└─────────────────────────────────────────────────┘
                          │
                          ▼
┌─────────────────────────────────────────────────┐
│                      416                        │
│     Determine infrastructure element and/or location│
└─────────────────────────────────────────────────┘
```

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012150455 A
- US 7107820 B
- EP 1452846 A